(19) Europäisches Patentamt
European Patent Office
Office européen des brevets

(11) EP 4 707 332 A1

(12) EUROPEAN PATENT APPLICATION
published in accordance with Art. 153(4) EPC

(43) Date of publication:
11.03.2026 Bulletin 2026/11

(21) Application number: 24815731.5

(22) Date of filing: 08.05.2024

(51) International Patent Classification (IPC):
*C08K 9/04* (2006.01) *C08K 3/26* (2006.01)
*C08K 3/013* (2018.01) *C08L 101/16* (2006.01)

(52) Cooperative Patent Classification (CPC):
C08K 3/013; C08K 3/26; C08K 9/04; C08L 101/16

(86) International application number:
PCT/KR2024/006188

(87) International publication number:
WO 2024/248352 (05.12.2024 Gazette 2024/49)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 26.05.2023 KR 20230068595

(71) Applicant: SK leaveo Co., Ltd.
Gyeonggi-do 16338 (KR)

(72) Inventors:
- KIM, Sangmin
Seoul 03142 (KR)
- CHOI, Yujin
Seoul 03142 (KR)
- LEE, Deuk-Young
Seoul 03142 (KR)

(74) Representative: Isarpatent
Patent- und Rechtsanwälte Partg mbB
Friedrichstraße 31
80801 München (DE)

(54) **BIODEGRADABLE RESIN COMPOSITION AND BIODEGRADABLE MOLDED PRODUCT COMPRISING SAME**

(57) The present invention Provides: a biodegradable resin composition comprising a biodegradable resin, light-blocking particles, and an inorganic filler, and having an elongation retention rate (ΔE) of 20% or more as measured by a predetermined measurement method; and a biodegradable molded product comprising the biodegradable resin. In addition, the content of the biodegradable resin may be 30-90 wt% based on the total weight of the biodegradable composition.

EP 4 707 332 A1

## Description

### TECHNICAL FIELD

The present disclosure relates to a biodegradable resin composition and a biodegradable molded article including the same.

### BACKGROUND ART

Recently, with increasing concern about environmental problems, there is a demand for solutions to the disposal problem of various household goods, particularly disposable products. Specifically, petroleum-based polymer materials are widely used in manufacturing various products such as films, fibers, packaging materials, bottles, containers, and the like because they are inexpensive and have excellent properties such as processability. However, they have disadvantages in that harmful substances are emitted when incinerated after the end of the product's lifespan, and it takes hundreds of years for them to decompose naturally, depending on the type.

To overcome these limitations of petroleum-based polymer materials, research is being actively conducted on biodegradable resins that decompose within a relatively short period. As biodegradable resins, polylactic acid (PLA), polybutylene adipate terephthalate (PBAT), polybutylene succinate (PBS), and the like are being introduced as alternatives.

However, PLA lacks flexibility, and PBAT has poor mechanical properties, limiting their applications. To improve these problems, U.S. Patent No. 9,096,758 discloses using a mixture of PBAT and an inorganic filler as a biodegradable resin composition. However, due to still low mechanical properties and low resistance to ultraviolet (UV) rays, there were limitations in replacing conventional petroleum-based polymer materials.

### DETAILED DESCRIPTION OF THE INVENTION

Technical Problem

The present invention provides a biodegradable resin composition having excellent mechanical properties and UV resistance, and a biodegradable molded article comprising the same.

Solution to the Problem

In accordance with an aspect of the present disclosure, the above and other objects can be accomplished by the provision of a biodegradable resin composition including a biodegradable resin, light-blocking particles, and an inorganic filler and having an elongation retention ($\Delta$E) of 20% or more measured according to the following measurement method:

[Measurement method]

1) The biodegradable resin composition is pelletized at 155°C.
2) The pelletized biodegradable resin composition is manufactured into a biodegradable sheet having a Blow-Up Ratio (BUR) of 2.6, an average thickness of 15 $\mu$m, and a width of 300 mm.
3) The biodegradable sheet is prepared as a sample having a width of 15 mm, and then a first elongation ($E_0$) of the sample in a Machine Direction (MD) over a length of 50 mm is measured using a Universal Testing Machine (UTM).
4) The sample is put into a QUV tester, and after being irradiated with UV for 8 hours at 60°C and an illuminance of 0.89 w/m$^2$, a cycle of maintaining (the sample) at 50°C for 4 hours is performed 8 times. Next, the sample is taken out and dried at room temperature for 24 hours, and then a second elongation ($E_1$) of the sample in the Machine Direction (MD) is measured using the Universal Testing Machine (UTM).
6) An elongation retention ($\Delta$E) is calculated by Equation 1 below:

[Equation 1]

$$\Delta E(\%) = (E_1 / E_0) \times 100$$

In an embodiment of the present disclosure, the biodegradable resin may be included in a content of 30 wt% to 90

wt% based on the total weight of the biodegradable resin composition.

In an embodiment of the present disclosure, the light-blocking particles may be included in a content of 0.1 wt% to 10.0 wt% based on the total weight of the biodegradable resin composition.

In an embodiment of the present disclosure, the light-blocking particles may have an average diameter of 10 nm to 500 nm.

In an embodiment of the present disclosure, the light-blocking particles may have a BET specific surface area of 100 $m^2$/g to 700 $m^2$/g.

In an embodiment of the present disclosure, the light-blocking particles may have a moisture absorption rate of 0.01 % to 2.00 % under conditions of 25°C, 90% relative humidity, and 120 hours.

In an embodiment of the present disclosure, the inorganic filler may be included in a content of 10 wt% to 90 wt% based on the total weight of the biodegradable resin composition.

In an embodiment of the present disclosure, the inorganic filler may include calcium carbonate surface-treated with an organic acid.

In an embodiment of the present disclosure, the first elongation of the biodegradable resin composition may be 150 % to 400 %.

In an embodiment of the present disclosure, the second elongation of the biodegradable resin composition may be 100 % to 300 %.

In an embodiment of the present disclosure, the biodegradable resin composition may further include a plasticizer.

In accordance with another aspect of the present disclosure, there is provided a biodegradable molded article including a biodegradable resin, light-blocking particles, and an inorganic filler and having an elongation retention (ΔE) of 20% or more measured by the following measurement method:

[Measurement method]

1) The biodegradable resin composition is pelletized at 155°C.
2) The pelletized biodegradable resin composition is manufactured into a biodegradable sheet having a Blow-Up Ratio (BUR) of 2.6, an average thickness of 15 μm, and a width of 300 mm.
3) The biodegradable sheet is prepared as a sample having a width of 15 mm, and then a first elongation ($E_0$) of the sample in a Machine Direction (MD) over a length of 50 mm is measured using a Universal Testing Machine (UTM).
4) The sample is put into a QUV tester, and after being irradiated with UV for 8 hours at 60°C and an illuminance of 0.89 w/$m^2$, a cycle of maintaining (the sample) at 50°C for 4 hours is performed 8 times. Next, the sample is taken out and dried at room temperature for 24 hours, and then a second elongation ($E_1$) of the sample in the Machine Direction (MD) is measured using the Universal Testing Machine (UTM).
6) An elongation retention (ΔE) is calculated by Equation 1 below:

[Equation 1]

$$\Delta E(\%) = (E_1 / E_0) \times 100$$

In an embodiment of the present disclosure, the biodegradable molded article may be a nonwoven fabric, a vacuum-formed sheet, a blown molded article, or an injection-molded article.

**Advantageous Effects of the Invention**

Since the biodegradable resin composition according to the present disclosure has high biodegradability, a biodegradable molded article containing the biodegradable resin composition can be easily decomposed when disposed of.

In addition, the biodegradable resin composition according to the present disclosure has excellent resistance to UV rays, thereby exhibiting high elongation retention. That is, a biodegradable sheet and biodegradable molded article containing the biodegradable resin composition can appropriately maintain mechanical strength within a normal service life.

Furthermore, the biodegradable resin composition according to the present disclosure exhibits high biodegradability and improved hydrolysis resistance while minimizing a decrease in mechanical strength, such that a user can maintain a certain level of mechanical strength and chemical properties within a normal service life.

## BEST MODE FOR CARRYING OUT THE INVENTION

Structural or functional descriptions of embodiments disclosed in the present specification or application are merely illustrated for the purpose of explaining embodiments according to the technical idea of the present disclosure, embodiments according to the technical idea of the present disclosure may be implemented in various forms other than the embodiments disclosed in the present specification or application, and it is not to be construed that the technical idea of the present disclosure is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term 'about' in all cases unless otherwise specified.

Hereinafter, a biodegradable resin composition according to the present disclosure and a biodegradable molded article including the same are described.

<Biodegradable resin composition>

The biodegradable resin composition according to the present disclosure includes a biodegradable resin, light-blocking particles, and an inorganic filler and has an elongation retention (ΔE) of 20% or more measured according to the following measurement method:

[Measurement method]

1) The biodegradable resin composition is pelletized at 155°C.
2) The pelletized biodegradable resin composition is manufactured into a biodegradable sheet having a Blow-Up Ratio (BUR) of 2.6, an average thickness of 15 μm, and a width of 300 mm.
3) The biodegradable sheet is prepared as a sample having a width of 15 mm, and then a first elongation ($E_0$) of the sample in a Machine Direction (MD) over a length of 50 mm is measured using a Universal Testing Machine (UTM).
4) The sample is put into a QUV tester, and after being irradiated with UV for 8 hours at 60°C and an illuminance of 0.89 w/m$^2$, a cycle of maintaining (the sample) at 50°C for 4 hours is performed 8 times. Next, the sample is taken out and dried at room temperature for 24 hours, and then a second elongation ($E_1$) of the sample in the Machine Direction (MD) is measured using the Universal Testing Machine (UTM).
6) An elongation retention (ΔE) is calculated by Equation 1 below:

[Equation 1]

$$\Delta E(\%) = (E_1 / E_0) \times 100$$

The biodegradable resin composition includes a biodegradable resin.

The biodegradable resin may include a diol ingredient and a dicarboxylic acid ingredient. Specifically, the biodegradable resin may include a first repeat unit and a second repeat unit. The first repeat unit may include a diol ingredient and an aromatic dicarboxylic acid ingredient, and the second repeat unit may include a diol ingredient and an aliphatic dicarboxylic acid ingredient.

The diol ingredient may include 1,4-butanediol or a derivative thereof. Based on the total mol number of the diol ingredient, the diol ingredient may include 1,4-butanediol or a derivative thereof in an amount of 95 mol% or more, 97 mol% or more, 98 mol% or more, 99 mol% or more, or 100 mol%. The diol ingredient may improve biodegradability, flexibility, and strength by including 1,4-butanediol or a derivative thereof. When the diol ingredient consists only of 1,4-butanediol, the improvement in biodegradability and strength may be maximized.

The diol ingredient may further include a second diol that is different from the first diol, which is 1,4-butanediol or a derivative thereof. The second diol may include one or more selected from the group consisting of propanediol, hexanediol, cyclohexanedimethanol, and ethylene glycol. Specifically, the second diol may include one or more selected from the group consisting of 1,3-propanediol, 1,2-propanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, 1,4-cyclohexanedimethanol, and ethylene glycol. Based on the total mol number of the diol ingredient, the diol ingredient may include the second diol in an amount of 5 mol% or less, 3 mol% or less, 2 mol% or

less, or 1 mol% or less.

The aromatic dicarboxylic acid ingredient may include one or more selected from the group consisting of terephthalic acid, dimethyl terephthalic acid, and derivatives thereof. Specifically, the aromatic dicarboxylic acid ingredient may be terephthalic acid or dimethyl terephthalic acid. Based on a total mol number of the dicarboxylic acid ingredient, the dicarboxylic acid ingredient may include the aromatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The aliphatic dicarboxylic acid ingredient may include one or more selected from the group consisting of adipic acid, succinic acid, and derivatives thereof. Specifically, the aliphatic dicarboxylic acid ingredient may be adipic acid or succinic acid. Based on a total mol number of the dicarboxylic acid ingredient, the dicarboxylic acid ingredient may include the aliphatic dicarboxylic acid ingredient in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The molar ratio of the aromatic dicarboxylic acid ingredient to the aliphatic dicarboxylic acid ingredient may be 0.5 to 1.5:1, 0.6 to 1.5:1, 0.6 to 1.4:1, 0.7 to 1.4:1, 0.7 to 1.3:1, or 0.8 to 1.2:1.

The molar ratio of the diol ingredient to the dicarboxylic acid ingredient may be 0.5 to 2:1, 0.5 to 1.9:1, 0.5 to 1.8:1, 0.5 to 1.7:1, 0.6 to 1.7:1, 0.6 to 1.6:1, 0.7 to 1.5:1, or 0.9 to 1.2:1. When the range is satisfied, the biodegradability, strength, and processability of the biodegradable resin composition may be improved without discoloration such as yellowing.

The biodegradable resin may include polybutylene adipate terephthalate (PBAT), in which the first repeat unit may include a diol ingredient and an aromatic dicarboxylic acid ingredient and the second repeat unit may include a diol ingredient and an aliphatic dicarboxylic acid ingredient.

Specifically, the polybutylene adipate terephthalate may include a unit represented by Chemical Formula 1 below:

[Formula 1]

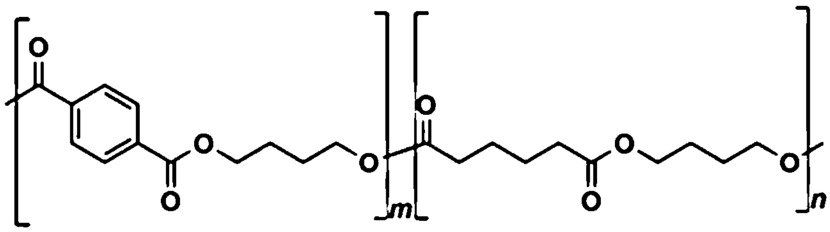

In Chemical Formula 1, m may be 1 to 20, and n may be 1 to 20.

The biodegradable resin composition may include a heterogeneous biodegradable resin in addition to the polybutylene adipate terephthalate. For example, the heterogeneous biodegradable resin may include one or more selected from the group consisting of polybutylene azelate terephthalate (PBAzT), polybutylene sebacate terephthalate (PBSeT), polybutylene succinate terephthalate (PBST), polyhydroxyalkanoate (PHA), and polylactic acid (PLA). The heterogeneous biodegradable resin may complement the mechanical properties of the polybutylene adipate terephthalate.

The polylactic acid may be a polylactic acid that has stereocomplex crystals and a high melting point. In addition, the polylactic acid may be formed by solution mixing or melt mixing of poly L-lactic acid and poly D-lactic acid.

Specifically, the polylactic acid may include a unit represented by Chemical Formula 2 below:

[Formula 2]

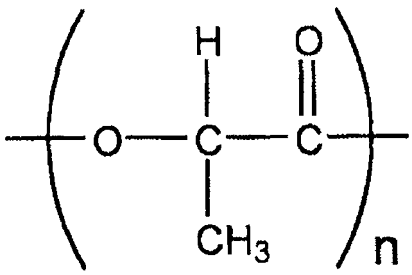

The polylactic acid may be a polymer including an L-lactic acid unit and/or a D-lactic acid unit. The polylactic acid may include poly L-lactic acid and/or poly D-lactic acid.

The poly L-lactic acid may be a polymer including primarily the L-lactic acid unit. The poly L-lactic acid may include the L-lactic acid unit in an amount of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, about 96 mol% to about 100 mol%, or about 97mol% to about 100 mol%. The poly L-lactic acid may include the D-lactic acid unit and/or a unit other than lactic acid. The poly L-lactic acid may include the D-lactic acid unit and/or a unit other than lactic acid in an amount of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The poly D-lactic acid may be a polymer including primarily the D-lactic acid unit. The poly D-lactic acid may include the D-lactic acid unit in an amount of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, or about 97 mol% to about 100 mol%. The poly D-lactic acid may include the L-lactic acid unit and/or a unit other than lactic acid. The poly D-lactic acid may include the L-lactic acid unit and/or a unit other than lactic acid in an amount of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various components.

For example, the dicarboxylic acids may include succinic acid, adipic acid, azela phosphoric acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER™ L9000. In addition, the polylactic acid may be commercially available from Natureworks LLC (NATUREWORKS®) or Mitsui Chemical (LACEA™). In addition, the polylactic acid may be described in U.S. Patent Nos. 4,797,468; 5,470,944; 5,770,682; 5,821,327; 5,880,254; and 6,326,458, the entirety of which is incorporated in the present disclosure by reference for all purposes.

The polyhydroxyalkanoate may include a unit represented by Chemical Formula 3 below:

[Formula 3]

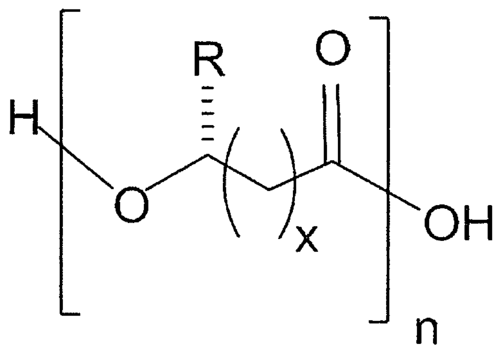

In Chemical Formula 3, R may be independently selected from the group consisting of a hydrogen atom, a hydrocarbon group, a hetero atom, and combinations thereof, n may be the number of repeat units from 1 to 35,000, and x may be an integer from 1 to 5.

The polyhydroxyalkanoate may be a homopolymer or copolymer consisting of at least one moiety selected from the group consisting of 3-hydroxypropionate, 3-hydroxybutyrate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate, 3-hydroxydodecanoate, and combinations thereof. In addition, the at least one moiety may have the same or different numbers of repeat

units.

The polyhydroxyalkanoate may be a copolymer containing a 3-hydroxybutyrate unit and a 3-hydroxyhexanoate unit as main constituent units.

The polyhydroxyalkanoate may include 80 mol% or more of the 3-hydroxybutyrate unit as a component. The polyhydroxyalkanoate may include the 3-hydroxybutyrate unit in an amount of about 85 mol% or more.

The polyhydroxyalkanoate may be a poly(3-hydroxybutyrate-co-3-hydroxyhexanoate) copolymer resin or a poly(3-hydroxybutyrate-co-3-hydroxyvalerate-co-3-hydroxyhexanoate) copolymer resin.

For example, the polyhydroxyalkanoate may be produced using a microorganism such as Alcaligenes eutrophus AC 32 (International deposit based on the Budapest Treaty, International depositary authority: Independent Administrative Corporation Industrial Technology Research Institute Patent Biological Deposit Center (Central No. 6, 1-1, Tsukuba-shi, Ibaraki Prefecture, Japan), Original deposit date: August 12, 1996, Transferred on August 7, 1997, Deposit number: FERM BP-6038, Transferred from original deposit FERM P-15786, J. Bacteriol., 179, 4821 (1997)) created by introducing an Aeromonas caviae-derived PHA synthesizing enzyme gene into Alcaligenes eutrophus.

The polyhydroxyalkanoate may be available commercially. The commercially available products of the polyhydroxyalkanoate may include 「NODAX」 of Danimer Co., 「ENMAT」 of Tianan Biopolymer Co., 「PHACT」 of CJ Co., and 「Aonilex (registered trademark) X131N」, 「Aonilex (registered trademark) X131A」, Aonilex (registered trademark) 151A」, 「Aonilex (registered trademark) 151C」, 「PHBH (registered trademark) X331N」, 「PHBH (registered trademark) X131A」, 「PHBH (registered trademark) 151A」, and 「PHBH (registered trademark) 151C」 of Kaneka Co.

Based on the total weight of the biodegradable resin composition, the biodegradable resin may be included in an amount of 90 wt% or less, 89 wt% or less, 88 wt% or less, 87 wt% or less, 86 wt% or less, 85 wt% or less, 80 wt% or less, 70 wt% or less, 10 wt% or more to 90 wt% or less, 20 wt% or more to 90 wt% or less, 30 wt% or more to 90 wt% or less, 40 wt% or more to 80 wt% or less, 40 wt% or more to 70 wt% or less, or 45 wt% or more to 70 wt% or less. When the range is satisfied, hydrolysis resistance may be significantly improved without deterioration in mechanical properties.

The biodegradable resin composition includes light-blocking particles. The light-blocking particles may include carbon black. The light-blocking particles may block ultraviolet (UV) rays and serve as a peroxide decomposer and a radical scavenger.

Based on the total weight of the biodegradable resin composition, the content of the light-blocking particles may be 0.1 wt% to 10.0 wt%, 0.1 wt% to 8.0 wt%, 0.1 wt% to 6.0 wt%, 0.1 wt% to 5.0 wt%, or 0.1 wt% to 4.0 wt%. When the range is satisfied, a decrease in tensile strength and elongation due to UV influence may be minimized without lowering biodegradability.

The average diameter of the light-blocking particles may be 10 nm to 500 nm, 20 nm to 500 nm, 20 nm to 400 nm, 20 nm to 300 nm, 20 nm to 250 nm, or 20 nm to 200 nm. The light-blocking particles may have a pH of 3 to 10, 3.5 to 10, 4 to 10, 4.5 to 10, 4.5 to 9.5, 5 to 9.5, or 5 to 9 at 25°C. When the range is satisfied, dispersibility within the biodegradable resin composition is excellent, so that a decrease in mechanical properties due to UV influence may be minimized.

The BET specific surface area of the light-blocking particles may be 100 $m^2/g$ to 700 $m^2/g$, 150 $m^2/g$ to 700 $m^2/g$, 200 $m^2/g$ to 700 $m^2/g$, 250 $m^2/g$ to 700 $m^2/g$, or 250 $m^2/g$ to 650 $m^2/g$. The specific gravity of the light-blocking particles may be 1.0 to 2.5, 1.3 to 2.5, 1.5 to 2.5, 1.5 to 2.3, 1.5 to 2.1, or 1.7 to 2.1. When the range is satisfied, dispersibility within the biodegradable resin composition is good, and the smoothness of a biodegradable molded article manufactured from the biodegradable resin composition may be improved.

Under conditions of 25°C temperature, 90% relative humidity, and 120 hours, the light-blocking particles may have a moisture absorption rate of 0.01 % to 2.00 %, 0.01 % to 1.80 %, 0.01 % to 1.60 %, 0.01 % to 1.40 %, 0.01 % to 1.20 %, or 0.01 % to 1.00 %. The moisture absorption rate may be measured according to Calculation Equation 1 below by measuring the initial weight of the carbon black, and then storing it for 120 hours under conditions of 25°C temperature and 90% relative humidity, and then measuring an increase in the weight of the carbon black.

Moisture absorption rate (%) = [Weight increase of carbon black (under conditions of 25°C temperature, 90% relative humidity, and 120 hours) / Initial weight of carbon black] $\times$ 100 [Calculation Equation 1]

When the range is satisfied, UV rays may be blocked, and at the same time, hydrolysis resistance may be improved.

The surface of the light-blocking particles may be modified. The surface of the light-blocking particles may be imparted with hydrophobic properties by a surface modifier. The surface modifier may include an amine-based compound having 5 to 20 carbon atoms. The surface-modified light-blocking particles have increased repulsion against water, so moisture absorption may be reduced, and thus the biodegradable resin composition including the light-blocking particles may have improved hydrolysis resistance.

The biodegradable resin composition includes an inorganic filler.

Based on the total weight of the biodegradable resin composition, the inorganic filler may be included in an

amount of 10 wt% or more, 20 wt% or more, 30 wt% or more, 35 wt% or more, 40 wt% or more, 45 wt% or more, 50 wt% or more, 55 wt% or more, 60 wt% or more, 65 wt% or more, 70 wt% or more, 75 wt% or more, 80 wt% or more, 10 wt% or more to 90 wt% or less, 20 wt% or more to 90 wt% or less, 30 wt% or more to 90 wt% or less, 30 wt% or more to 85 wt% or less, 30 wt% or more to 80 wt% or less, 30 wt% or more to 75 wt% or less, 30 wt% or more to 70 wt% or less, 35 wt% or more to 85 wt% or less, 35 wt% or more to 80 wt% or less, or 35 wt% or more to 75 wt% or less. When the range is satisfied, production costs may be reduced, biodegradability and hydrolysis resistance may be improved by increasing a biodegradation starting point, and the physical properties of the molded article may be improved by preventing a decrease in the dispersibility of the inorganic filler. Furthermore, since the specific gravity of the biodegradable molded article does not increase significantly, it may be used in a wider variety of products, and product reliability may be secured as the elongation and strength of the product may be maintained.

The inorganic filler may have a specific surface area of 0.1 $m^2/g$ to 10.0 $m^2/g$, 0.1 $m^2/g$ to 9.0 $m^2/g$, 0.1 $m^2/g$ to 8.0 $m^2/g$, 0.1 $m^2/g$ to 7.0 $m^2/g$, 0.1 $m^2/g$ to 6.0 $m^2/g$, 0.1 $m^2/g$ to 5.0 $m^2/g$, 0.1 $m^2/g$ to 4.0 $m^2/g$, or 0.1 $m^2/g$ to 3.0 $m^2/g$. The specific surface area may be measured using a nitrogen gas adsorption method. When the range is satisfied, it may be easily dispersed in the biodegradable resin, promoting the biodegradability of the biodegradable resin and improving processability.

The inorganic filler may have an average particle diameter of 0.1 $\mu$m to 10.0 $\mu$m, 0.1 $\mu$m to 9.0 $\mu$m, 0.1 $\mu$m to 8.0 $\mu$m, 0.1 $\mu$m to 7.0 $\mu$m, 0.1 $\mu$m to 6.0 $\mu$m, 0.1 $\mu$m to 5.0 $\mu$m, 0.1 $\mu$m to 4.0 $\mu$m, 0.1 $\mu$m to 3.0 $\mu$m, 1.0 $\mu$m to 5.0 $\mu$m, 1.0 $\mu$m to 4.0 $\mu$m, or 1.0 $\mu$m to 3.0 $\mu$m. The average particle diameter may be calculated based on the measurement results of a specific surface area by an air permeation method using a specific surface area measuring device. When the range is satisfied, an increase in viscosity may be prevented when mixing the biodegradable resin and the inorganic filler, and particle size uniformity may be improved.

The inorganic filler may have a sphericity of 0.30 to 0.95, 0.30 to 0.93, 0.30 to 0.90, 0.50 to 0.95, 0.50 to 0.93, 0.50 to 0.90, 0.60 to 0.95, 0.60 to 0.93, or 0.60 to 0.90. When the range is satisfied, biodegradability may be improved by containing many fine pores generated at the interface between the biodegradable resin and the inorganic filler. In addition, the strength and molding processability of a molded article may be increased.

The inorganic filler may include calcium carbonate ($CaCO_3$). In general, when a molded article manufactured using a biodegradable resin composition biodegrades, acid components may be generated. The acid components and the calcium carbonate may react to generate $CO_2$ and $H_2O$, so the biodegradation rate of the molded article into molecular units may be further increased. In addition, the calcium carbonate may neutralize the acid components, thereby reducing environmental load and preventing acidification of the soil.

The calcium carbonate may be heavy calcium carbonate obtained by mechanically grinding or classifying natural calcium carbonate containing $CaCO_3$ as a main ingredient, such as limestone, chalk, marble, shell, and coral.

The calcium carbonate may be surface-treated with an organic acid. By surface-treating the calcium carbonate with the organic acid, the dispersibility of the biodegradable resin composition may be increased and reactivity with the biodegradable resin may be improved. The surface treatment may be performed through a physical method such as plasma treatment and corona treatment or through a chemical method using a chemical agent such as a silane coupling agent, a titanium coupling agent, and a surfactant. The organic acid may include a higher fatty acid, a higher fatty acid ester, a higher fatty acid amide, and a higher fatty acid, for example, calcium stearate.

The surface-treated calcium carbonate may be prepared by the following method.

First, calcium carbonate powder may be prepared through a grinding process. Then, the calcium carbonate powder may be classified to obtain calcium carbonate of a desired particle size.

Then, the calcium carbonate may be heated at about 200 °C to about 800 °C using a heating device selected from a kiln, an electric furnace, or a microwave. The heat treatment time may be about 5 minutes to about 30 minutes, about 7 minutes to about 15 minutes, or about 7 minutes to about 14 minutes. The heat treatment temperature may be about 250 °C to about 700 °C or about 300 °C to about 600 °C. By heat treating the calcium carbonate under the conditions described above, moisture in the calcium carbonate may be easily removed, the organic acid may be easily bonded to the surface of the calcium carbonate, and agglomeration of the calcium carbonate may be minimized.

Next, a process of treating the surface of the calcium carbonate may be performed by adding an organic acid to the heat-treated calcium carbonate. The process temperature may be 70 °C to about 130 °C. Based on 100 parts by weight of the calcium carbonate, the organic acid may be added in an amount of about 0.5 parts by weight to about 5 parts by weight, about 0.5 parts by weight to about 4 parts by weight, about 0.5 parts by weight to about 3 parts by weight, about 0.5 parts by weight to about 2 parts by weight, about 0.6 parts by weight to about 5 parts by weight, about 0.6 parts by weight to about 4 parts by weight, about 0.6 parts by weight to about 3 parts by weight, about 0.6 parts by weight to about 2 parts by weight, about 0.7 parts by weight to about 5 parts by weight, about 0.7 parts by weight to about 4 parts by weight, about 0.7 parts by weight to about 3 parts by weight, or about 0.7 parts by weight to about 2 parts by weight. The process time may be about 1 minute to about 60 minutes, about 10 minutes to about 30 minutes, or about 5 minutes to about 20 minutes.

Next, the surface-treated calcium carbonate may be subjected to additional processes such as grinding and classifying aggregates generated in the surface treatment process. In the surface-treated calcium carbonate, based on a

total weight, the content of the organic acid may be about 0.1 wt% to about 3 wt%, about 0.1 wt% to about 2 wt%, about 0.1 wt% to about 1 wt%, about 0.2 wt% to about 3 wt%, about 0.2 wt% to about 2 wt%, about 0.2 wt% to about 1 wt%, about 0.3 wt% to about 3 wt%, about 0.3 wt% to about 2 wt%, or about 0.3 wt% to about 1 wt%.

The surface-treated calcium carbonate may be partially oxidized by the organic acid. The surface-treated calcium carbonate may partially contain oxidized calcium (CaO). Based on 100 volume% of the surface-treated calcium carbonate particles, the ratio of the oxidized calcium may be 5 volume% or less, 4 volume% or less, 3 volume% or less, 2 volume% or less, 1 volume% or less, 0.01 volume% or more and 5 volume% or less, 0.01 volume% or more and 4 volume% or less, 0.01 volume% or more and 3 volume% or less, 0.01 volume% or more and 2 volume% or less, or 0.01 volume% or more and 1 volume% or less. The ratio of the oxidized calcium may be measured by ethylenediaminetetraacetic acid (EDTA) titration according to JIS R 9011. When the range is satisfied, the uniformity of the surface of the calcium carbonate may be improved, and the elution of organic acids from the surface of the calcium carbonate may be minimized, thereby improving hydrolysis resistance.

The biodegradable resin composition may further include a reinforcing agent. The reinforcing agent may be a fiber derived from biomass. The reinforcing agent may include nanocellulose. The nanocellulose may be natural nanocellulose in the form of a gel or dry powder. The dispersion stability, strength, and processability of a biodegradable resin containing the nanocellulose may be improved.

The nanocellulose may have a diameter of 1 nm to 100 nm, 1 nm to 95 nm, 5 nm to 90 nm, 10 nm to 80 nm, 5 nm to 60 nm, or 15 nm to 60 nm. The nanocellulose may have a length of 5 nm to 5 μm, 5 nm to 1 μm, 10 nm to 700 nm, 20 nm to 500 nm, 60 nm to 300 nm, 80 nm to 200 nm, or 100 nm to 250 nm. When the ranges are satisfied, the strength and tear strength of the biodegradable resin composition may be further improved.

The nanocellulose may be in the form of dry powder or gel having aggregated secondary particles rather than single particles, and the size of the secondary particles may be 1 μm to 50 μm, 2 μm to 45 μm, or 5 μm to 50 μm. The nanocellulose may be in the form of freeze-dried powder to reduce the volume thereof for easy storage and transportation.

The nanocellulose may have an average particle diameter of 200 nm or less, 190 nm or less, or 185 nm or less. The particle diameter deviation may be 20 % or less, 18 % or less, or 16 % or less. When the range is satisfied, the dispersibility and durability of the nanocellulose may be improved.

The nanocellulose may function as a crystal nucleating agent that improves the crystallization rate of the biodegradable resin composition and increases the crystallization temperature of the biodegradable resin composition. The nanocellulose may include one or more selected from the group consisting of cellulose nanocrystals, cellulose nanofibers, and microfibrillated cellulose. In terms of strength and thermal properties, the cellulose nanocrystals or the cellulose nanofibers are preferred.

The nanocellulose may perform UV-resistant function and may impart adequate UV-resistant properties, biodegradation rate, and hydrolysis rate to the biodegradable resin. The nanocellulose may include one or more selected from the group consisting of hydroxymethyl cellulose, hydroxyethyl cellulose, hydroxypropyl cellulose, hydroxypropyl methyl cellulose, cellulose acetate, methyl cellulose, ethyl cellulose, propyl cellulose, butyl cellulose, pentyl cellulose, hexyl cellulose, and cyclohexyl cellulose.

The nanocellulose may be pretreated by a bead mill or by ultrasonic waves. The nanocellulose may be water-dispersed nanocellulose pretreated with a bead mill or pretreated with ultrasonic waves.

The nanocellulose may be obtained by dispersing cellulose nanocrystals in the form of dry powder or gel with a particle diameter of 1 μm to 50 μm in water and then pre-treating the cellulose nanocrystals with a bead mill or ultrasonic waves. In this case, the number of nanocellulose particles may increase, thereby improving dispersibility.

Based on a total weight of the nanocellulose, the nanocellulose may be pre-treated with 0.01 to 10 wt%, 0.05 to 8 wt%, 0.1 to 8 wt%, 0.5 to 6 wt%, or 0.7 to 6 wt% of a silane coupling agent. When the range is satisfied, interfacial adhesion, dispersibility, and compatibility may be maximized. Thus, the mechanical properties, durability, and hydrolysis resistance of a biodegradable resin composition including the nanocellulose may be further improved.

The biodegradable resin may include the nanocellulose in an amount of 0.01 to 3 wt%, 0.01 to 2.5 wt%, 0.05 to 2 wt%, 0.07 to 1.8 wt%, 0.1 to 1.2 wt%, 0.1 to 1 wt%, or 0.15 to 0.7 wt%, based on the total weight of the biodegradable resin. When the range is satisfied, the biodegradability and strength of the biodegradable resin composition may be further improved.

The biodegradable resin composition may include an oligomer. The oligomer may have a weight average molecular weight of about 400 g/mol to about 1,300 g/mol. Based on the weight of the biodegradable resin, the oligomer may be included in an amount of about 3,000 ppm to about 30,000 ppm, about 5,000 ppm to about 20,000 ppm, or about 5,000 ppm to about 15,000 ppm in the biodegradable resin composition. The oligomer may be a reaction product of at least two of the diol, the aromatic dicarboxylic acid, and the aliphatic dicarboxylic acid. The oligomer may be a reaction product of 1,4-butanediol, terephthalic acid, and adipic acid.

The biodegradable resin composition may further include a plasticizer. The plasticizer may impart processability or flexibility to a molded article manufactured using the biodegradable resin composition. The plasticizer may be glycerol, an acrylate, glycerin, glycerol monostearate (GMS), sorbitol, or a mixture thereof. Based on the total weight of the

biodegradable resin composition, the plasticizer may be included in an amount of 0.1 wt% to 15 wt%, 0.1 wt% to 14 wt%, 0.1 wt% to 13 wt%, 0.1 wt% to 12 wt%, 0.1 wt% to 11 wt%, 0.1 wt% to 10 wt%, 0.1 wt% to 9 wt%, 0.1 wt% to 8 wt%, 0.1 wt% to 7 wt%, 0.1 wt% to 6 wt%, or 0.1 wt% to 5 wt%. When the range is satisfied, the elongation and tearing strength of the molded article manufactured using the biodegradable resin composition may be improved.

The biodegradable resin composition may further include an antioxidant. The antioxidant may include one or more selected from the group consisting of a phosphorus-based antioxidant, a phenol-based antioxidant, and a pentaerythritol-based antioxidant.

The phosphorus-based antioxidant may include one or more selected from the group consisting of triesters of phosphorous acids such as triphenyl phosphite, trisnonylphenyl phosphite, and tris(2,4-di-t-butylphenyl)phosphite, diesters, monoesters, trimethyl phosphate, triethyl phosphate, tributyl phosphate, trioctyl phosphate, triphenyl phosphate, tricresyl phosphate, tris(nonylphenyl)phosphate, and 2-ethylphenyl diphenyl phosphate.

The phenol-based antioxidant may include one or more selected from the group consisting of $\alpha$-tocopherol, butylhydroxytoluene, sinapyl alcohol, vitamin E, n-octadecyl-3-(3,5-di-t-butyl-4-hydroxyphenyl)propionate, 2-t-butyl-6-(3'-t-butyl-5'-methyl-2'-hydroxybenzyl)-4-methylphenyl acrylate, 2, 6-di-t-butyl-4-(N,N-dimethylaminomethyl)phenol, 3,5-di-t-butyl-4-hydroxybenzyl phosphonate diethyl ester, 2,2-bis(((3-(3,5-di-tert-butyl-4-hydroxyphenyl)propanoyl)oxy)methyl)propane-1,3-diyl bis(3-(3,5-di-tert)-butyl-4-hydroxyphenyl)propanoate), pentaerythritol tetrakis(3,5-di-tert-butyl-4-hydroxyhydrocinnamate), pentaerythritol tetrakis[3-(3,5-di-tert-butyl-4-hydroxyphenyl)propionate], and tetrakis [3-(3,5-di-t-butyl-4-hydroxyphenyl)propionyloxymethyl]methane.

The antioxidant may further include one or more selected from the group consisting of BHT, ascorbic acid, catechin, quercetin, dodecyl gallate, TBHQ, Ralox, Irganox 1135, Irganox 1076, nordihydroguaiaretic acid, epicatechin gallate, epigallocatechin gallate, epigallocatechin, propyl gallate, 2,3,5-trihydroxybutyrophenone, butylated hydroxyanisole, 4-hydroxymethyl-2,6-di-tert-butylphenol, $\alpha$-tocopherol, resveratrol, rutin, astaxanthin, lycopene, beta-carotene, and melatonin.

Based on the total weight of the biodegradable resin composition, the antioxidant may be included in an amount of 5 wt% or less, 3 wt% or less, 2 wt% or less, 1.5 wt% or less, 1 wt% or less, 0.5 wt% or less, 0.3 wt% or less, 0 to 5 wt%, 0.01 to 4 wt%, 0.1 to 3 wt%, 1 to 3 wt%, 1 to 2 wt%, 0.01 to 0.3 wt%, 0.05 to 0.3 wt%, 0.15 to 0.3 wt%, or 0.2 to 0.3 wt%.

The antioxidant may include both the phosphorus-based antioxidant and the phenol-based antioxidant. When the antioxidant includes both the phosphorus-based antioxidant and the phenol-based antioxidant, the weight ratio of the phosphorus-based antioxidant to the phenol-based antioxidant may be 1:10 to 10:1, 1:5 to 5:1, 1:1 to 5:1, 2:1 to 4:1, 2.5:1 to 3.5:1, 1:5 to 1:1, 1:2 to 1:4, or 1:2.5 to 1:3.5. When the range is satisfied, oxidation of the biodegradable resin composition may be delayed in various temperature ranges.

The biodegradable resin composition may include a heat stabilizer.

The heat stabilizer may be a phosphorus heat stabilizer. The heat stabilizer may include one or more selected from the group consisting of amine-based high-temperature heat stabilizers (e.g., tetraethylenepentamine), triethyl phosphonoacetate, phosphoric acid, phosphorous acid, polyphosphoric acid, trimethyl phosphate, triethyl phosphate, trimethyl phosphine, and triphenyl phosphine. The heat stabilizer may be an antioxidant that has an antioxidant function. Based on a total weight of the biodegradable resin, the heat stabilizer may be included in an amount of 3,000 ppm or less, 10 ppm to 3,000 ppm, 20 ppm to 2,000 ppm, 20 ppm to 1,500 ppm, or 20 ppm to 1,000 ppm.

The biodegradable resin composition may include a lubricant.

The lubricant may include one or more selected from the group consisting of fatty acid-based lubricants such as stearic acid; aliphatic alcohol-based lubricants; aliphatic amide-based lubricants such as stearamide; aliphatic ester-based lubricants such as stearic acid-n-butyl, hydroxystearic acid methyl, polyhydric alcohol fatty acid esters, saturated fatty acid esters, and ester wax; and fatty acid metal soap-based lubricants. Specifically, the lubricant may be a stearate-based lubricant, and may include one or more selected from the group consisting of calcium stearate, zinc stearate, barium stearate, magnesium stearate, glycerin stearate, and butyl stearate. The stearate-based lubricant may reduce heat generation due to friction during mixing, melting, and processing of raw materials, and has excellent dispersing and lubricating effects for a biodegradable polyester resin compared to its price, thereby improving manufacturing efficiency.

Based on the total weight of the biodegradable resin composition, the lubricant may be included in an amount of 5 wt% or less, 4 wt% or less, 3 wt% or less, 2 wt% or less, 1 wt% or less, less than 1 wt%, 0.9 wt% or less, 0.8 wt% or less, 0.7 wt% or less, 0.5 wt% or less, 0.3 wt% or less, or 0.1 wt% or less. When the range is satisfied, manufacturing efficiency may be improved without deteriorating the physical properties of the biodegradable resin composition.

The biodegradable resin composition may include a flame retardant. The flame retardant may include one or more selected from the group consisting of a halogen-based flame retardant, a phosphorus-based flame retardant, and a non-phosphorus halogen-based flame retardant such as metal hydrates.

The halogen-based flame retardant may include one or more selected from the group consisting of halogenated bisphenolic compounds such as halogenated bisphenyl alkanes, halogenated bisphenyl ethers, halogenated bisphenyl thioethers, and halogenated bisphenyl sulfones; and bisphenol-bis(alkyl ether) compounds such as brominated bisphenol A, brominated bisphenol S, chlorinated bisphenol A, and chlorinated bisphenol S.

The phosphorus-based flame retardant may include one or more selected from the group consisting of tris(diethyl phosphinic acid)aluminum, bisphenol A bis(diphenyl phosphate), phosphoric acid triaryl isopropyl, cresyl di-2,6-xylenyl phosphate, and aromatic condensation phosphoric acid ester.

The metal hydrates may include aluminum trihydrate, magnesium dihydroxide, or combinations thereof.

Flame retardant aids for improving the flame retardant effect may include one or more selected from the group consisting of antimony oxides such as antimony trioxide and antimony pentoxide, zinc oxide, iron oxide, aluminum oxide, molybdenum oxide, titanium oxide, calcium oxide, and magnesium oxide.

The biodegradable resin composition may include a foaming agent. The foaming agent may be mixed with the molten biodegradable resin composition or injected by applying pressure. The foaming agent may be a phase change from solid to gas or from liquid to gas or gas itself, and is used to control the foaming ratio (foaming density) of a foam sheet.

The foaming agent may include one or more selected from the group consisting of aliphatic hydrocarbons, alicyclic hydrocarbons, halogenated hydrocarbons, inorganic gases and water.

The biodegradable resin composition may include a dispersant. The dispersant may improve the dispersibility of a solvent and solute. The dispersant may include one or more selected from the group consisting of aliphatic polyesters, polylactic acid, polyglycolic acid, polycaprolactone, and polyhydroxyalkanoate.

Based on the total weight of the biodegradable resin composition, the dispersant may be included in an amount of 1 to 20 wt%, 1 to 15 wt%, 1 to 13 wt%, 1 to 11 wt%, 2 to 10 wt%, 5 to 15 wt%, 7 to 12 wt%, 2 to 8 wt%, 5 to 8 wt%, or 2 to 5 wt%.

The biodegradable resin composition may include a chain extender. The chain extender may include one or more selected from the group consisting of aromatic diisocyanates, aliphatic diisocyanates, isocyanurates, bisoxazolines, carboxylic acid anhydrides, and epoxides.

The aromatic diisocyanates may include one or more selected from the group consisting of tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate, and xylylene diisocyanate.

The aliphatic diisocyanates may include one or more selected from the group consisting of 1,6-hexamethylene diisocyanate, isophorone diisocyanate, and methylene bis(4-isocyanatocyclohexane).

The isocyanurates may include isophorone diisocyanate or methylene bis(4-isocyanatocyclohexane).

The bisoxazolines may include one or more selected from the group consisting of 2,2'-bis(2-oxazoline), bis(2-oxazolinyl)methane, 1,2-bis(2-oxazolinyl)ethane, 1,3-bis(2-oxazolinyl)propane, and 1,4-bis(2-oxazolinyl)butane.

The epoxide refers to an epoxy-containing copolymer based on at least one of styrene, acrylic acid ester, and/or methacrylic acid ester, and is preferably a copolymer having a glycidyl (meth)acrylate content of greater than 20, 30, or 50 wt%.

Based on the total weight of the biodegradable resin composition, the chain extender may be included in an amount of 1.5 wt% or less, 1.4 wt% or less, 1.3 wt% or less, 1.2 wt% or less, 1.1 wt% or less, 1 wt% or less, 0.9 wt% or less, 0.8 wt% or less, 0.7 wt% or less, 0.6 wt% or less, 0.5 wt% or less, 0.4 wt% or less, 0.3 wt% or less, 0 wt% to 1.5 wt%, 0.01 wt% to 1.5 wt%, 0.1 wt% to 1.5 wt%, 0.1 wt% to 1.0 wt%, 0.1 wt% to 0.9 wt%, 0.1 wt% to 0.8 wt%, 0.1 wt% to 0.7 wt%, 0.1 wt% to 0.6 wt%, or 0.1 wt% to 0.5 wt%.

The biodegradable resin composition has an elongation retention ($\Delta E$) of 20% or more measured by the following measurement method:

[Measurement method]

1) The biodegradable resin composition is pelletized at 155°C.
2) The pelletized biodegradable resin composition is manufactured into a biodegradable sheet having a Blow-Up Ratio (BUR) of 2.6, an average thickness of 15 μm, and a width of 300 mm.
3) The biodegradable sheet is prepared as a sample having a width of 15 mm, and then a first elongation ($E_0$) of the sample in a Machine Direction (MD) over a length of 50 mm is measured using a Universal Testing Machine (UTM).
4) The sample is put into a QUV tester, and after being irradiated with UV for 8 hours at 60°C and an illuminance of 0.89 w/m$^2$, a cycle of maintaining (the sample) at 50°C for 4 hours is performed 8 times. Next, the sample is taken out and dried at room temperature for 24 hours, and then a second elongation ($E_1$) of the sample in the Machine Direction (MD) is measured using the Universal Testing Machine (UTM).
6) An elongation retention ($\Delta E$) is calculated by Equation 1 below:

[Equation 1]

$$\Delta E(\%) = (E_1 / E_0) \times 100$$

The elongation retention may be an indicator representing the resistance to UV rays of the biodegradable resin composition. For example, the mechanical properties of the biodegradable resin composition may be deteriorated by UV rays. In particular, as the amount of exposure of the biodegradable resin composition to UV rays increases, the elongation may decrease significantly. That is, a decrease in the elongation retention ($\Delta E$), calculated as a ratio of the second elongation ($E_1$) to the first elongation ($E_0$), may mean that the resistance to UV rays of the biodegradable resin composition decreases.

Preferably, the biodegradable resin composition may have an elongation retention of 20% or more, 25% or more, 30% or more, 35% or more, 40% or more, 45% or more, 50% or more, 20% or more to 95% or less, or 20% or more to 90% or less measured by the measurement method,. Conventionally, a highly biodegradable resin composition was used to manufacture eco-friendly products, but it had low resistance to UV rays, making it difficult to apply to product fields requiring long-term durability. Accordingly, when the elongation retention of the biodegradable resin composition measured by the measurement method satisfies the range, resistance to UV rays is improved while maintaining high biodegradability. Thus, the manufactured biodegradable molded article may not only be easily decomposed when disposed of, but also properly maintain mechanical strength within a normal service life.

The first elongation of the biodegradable resin composition may be 150 % to 400 %, 160 % to 400 %, 160 % to 380 %, 160 % to 360 %, or 190 % to 345 %. The second elongation of the biodegradable resin composition may be 100 % to 300 %, 110 % to 300 %, 120 % to 300 %, 150 % to 300 %, or 150 % to 250 %. When the range is satisfied, the UV resistance, mechanical properties, and hydrolysis resistance of the biodegradable resin composition may be improved.

The biodegradable resin composition may include a hydrolysis inhibitor. As the hydrolysis inhibitor, two or more types of hydrolysis inhibitors having different weight average molecular weights may be used. When the weight average molecular weight (Mw) of the hydrolysis inhibitor is large, the volatility is low and the hydrolytic resistance may be improved. When the weight average molecular weight (Mw) of the hydrolysis inhibitor is small, the compatibility with a biodegradable resin may be increased.

One kind of hydrolysis inhibitor having a weight average molecular weight (Mw) of 10,000 g/mol or less, 9,000 g/mol or less, 8,000 g/mol or less, 7,000 g/mol or less, 6,000 g/mol or less, or 5,000 g/mol or less may be used to increase compatibility with a biodegradable resin, and one kind of hydrolysis inhibitor having a weight average molecular weight of 10,000 g/mol or more, 20,000 g/mol or more, 30,000 g/mol or more, 40,000 g/mol or more, or 50,000 g/mol or more may be used to improve low volatility and hydrolysis resistance. The weight average molecular weight may be measured as a relative value for a standard PS (standard polystyrene) sample through GPC using THF as an eluent. When the range is satisfied, the mechanical properties and hydrolysis resistance of the biodegradable resin composition may be improved.

The hydrolysis inhibitor may include a carbodiimide-based compound. The carbodiimide-based compound may be a monomer or a polymer. The carbodiimide-based compound may react with moisture and acid to convert into a urea structure, thereby reducing the reactivity among moisture, acid, and an ester group included in a biodegradable resin, and thus reducing the phenomenon of the biodegradable resin being hydrolyzed by moisture and acid. In conclusion, the hydrolysis resistance of the biodegradable resin composition may be improved.

The carbodiimide-based compound may include a compound represented by Formula 5 below:

[Formula 4]

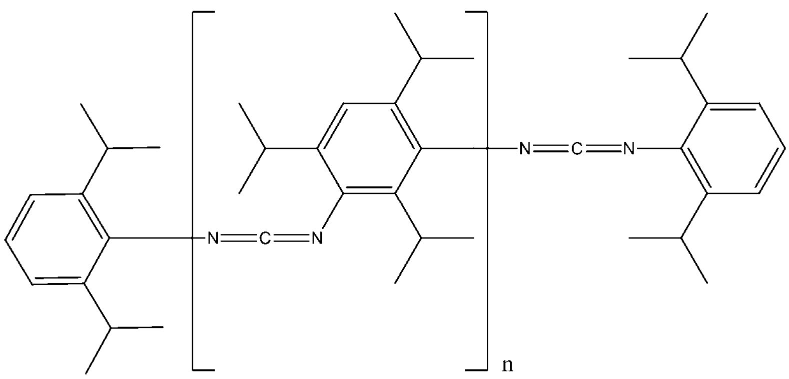

In Formula 4, n is an integer from 1 to 20.

The carbodiimide-based compound may be one or more selected from the group consisting of N,N'-di-o-tolylcarbodiimide, N,N'-diphenylcarbodiimide, N,N'-dioctyldecylcarbodiimide, N,N'-di-2,6-diketylphenylcarbodiimide, N-tolyl-N'cyclohexylcarbodiimide, N,N'-di-2,6-diisopropylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylene-bis-di-o-tolylcarbodiimide, p-phenylene-bisdicyclohexylcarbodiimide, hexamethylene-bisdicyclohexylcarbodiimide, a homopolymer of ethylene-bisdiphenylcarbodiimide and benzene-2,4-diisocyanato-1,3,5-tris(1-methylethyl), and a copolymer of 2,4-diisocyanato-1,3,5-tris(1-methylethyl) and 2,6-diisopropyl diisocyanate.

The weight average molecular weight of the carbodiimide-based compound may be 500 g/mol to 50,000 g/mol, 600 g/mol to 50,000 g/mol, 700 g/mol to 50,000 g/mol, 800 g/mol to 50,000 g/mol, 900 g/mol to 50,000 g/mol, 1,000 g/mol to 50,000 g/mol, 1,000 g/mol to 40,000 g/mol, or 1,000 g/mol to 30,000 g/mol.

The content of the NCN group in the carbodiimide-based compound may be 1 wt% to 20 wt%, 1 wt% to 19 wt%, 1 wt% to 18 wt%, 1 wt% to 17 wt%, 1 wt% to 16 wt%, 1 wt% to 15 wt%, 2 wt% to 15 wt%, 3 wt% to 15 wt%, 4 wt% to 15 wt%, 5 wt% to 15 wt%, or 6 wt% to 15 wt%. The content of the NCN group in the carbodiimide-based compound may be measured by titration with oxalic acid. When the range is satisfied, the hydrolysis resistance of the biodegradable resin composition may be improved without deterioration of the compatibility with the biodegradable resin.

The content of the hydrolysis inhibitor may be 0.1 wt% to 5.0 wt%, 0.1 wt% to 4.0 wt%, 0.1 wt% to 3.0 wt%, 0.1 wt% to 2.0 wt%, 0.1 wt% to 1.5 wt%, or 0.1 wt% to 1.0 wt% based on the total weight of the biodegradable resin composition. When the range is satisfied, the hydrolysis resistance and odor reduction effect of the biodegradable resin composition may be improved.

The biodegradable resin composition may include a compound including a urea group in a content of 0.01 wt% to 10.00 wt%, 0.01 wt% to 9.00 wt%, 0.01 wt% to 8.00 wt%, 0.01 wt% to 7.00 wt%, 0.01 wt% to 6.00 wt%, 0.01 wt% to 5.00 wt%, 0.01 wt% to 4.00 wt%, or 0.01 wt% to 3.00 wt% based on the total weight of the biodegradable resin composition. When the range is satisfied, the ratio of the ester group included in the biodegradable resin which can react with moisture or acid is reduced, so that the hydrophilicity may be improved.

The biodegradable resin composition may include a UV stabilizer. The UV stabilizer may absorb UV rays, whereby photooxidation caused by UV rays may be suppressed. Based on the total weight of the biodegradable resin composition, the content of the UV stabilizer may be 0.1 wt% to 5.0 wt%, 0.1 wt% to 4.0 wt%, 0.1 wt% to 3.0 wt%, 0.1 wt% to 2.0 wt%, or 0.1 wt% to 1.0 wt%. The weight average molecular weight (Mw) of the UV stabilizer may be 100 g/mol to 10,000 g/mol, 100 g/mol to 5,000 g/mol, 100 g/mol to 3,000 g/mol, 100 g/mol to 1,000 g/mol, 100 g/mol to 800 g/mol, or 200 g/mol to 800 g/mol. The melting point of the UV stabilizer may be 50 °C or more, 80 °C or more, 100 °C or more, 150 °C or more, or 150 °C or more to 230 °C or less. When the range is satisfied, a decrease in tensile strength and elongation due to UV influence may be minimized without lowering biodegradability.

The UV stabilizer may include one or more selected from the group consisting of benzotriazole derivatives, hydroxybenzophenone, hydroxyphenyltriazine, and esters of substituted or unsubstituted benzoic acid.

Specifically, the UV stabilizer may include a compound represented by Formula 5 below:

[Formula 5]

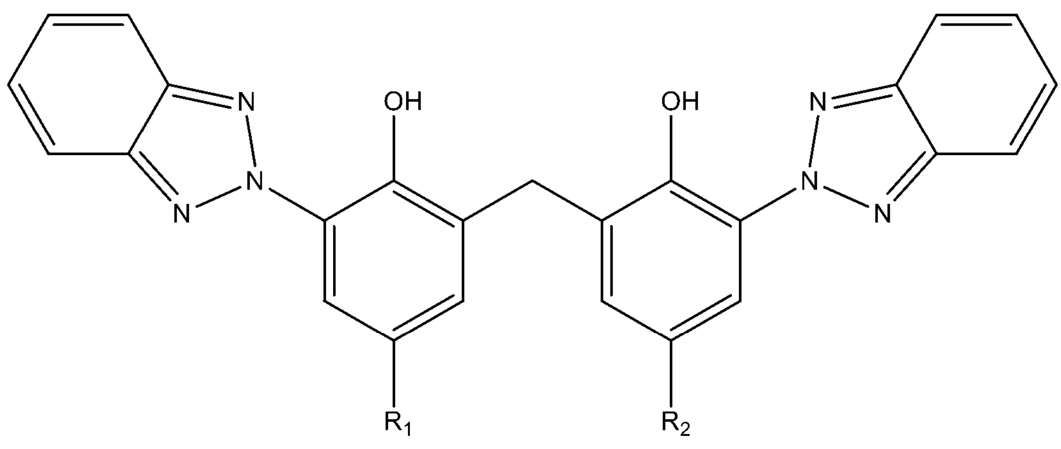

In Formula 5, $R_1$ and $R_2$ are each independently a substituted or unsubstituted alkyl having 1 to 20 carbon atoms.

<Biodegradable molded article>

The biodegradable molded article according to the present disclosure may be manufactured from the biodegradable resin composition. The biodegradable molded article may be manufactured by molding the biodegradable resin composition by a method known in the art, such as extrusion or injection, and the molded article may be a nonwoven fabric, a vacuum-formed sheet, a blown molded article, or an injection-molded article, but is not limited thereto. For example, the

biodegradable molded article may be an agricultural mulching film, a disposable glove, a food packaging material, a woven fabric, a knitted fabric, a non-woven fabric, a rope, or a container for food packaging. Since the biodegradable molded article may be manufactured from the biodegradable resin composition having excellent UV resistance, mechanical properties, and hydrolysis resistance, excellent properties may be exhibited when applied to a packaging material or a mulching film which requires dimensional stability against moisture or the like in an external environment.

The biodegradable molded article includes a biodegradable resin composition including a biodegradable resin, light-blocking particles and an inorganic filler and having an elongation retention ($\Delta E$) of 20% or more measured by the following measurement method. The biodegradable resin, the light-blocking particles and the inorganic filler may be the same as the biodegradable resin, light-blocking particles and inorganic filler of the biodegradable resin composition described above.

[Measurement method]

1) The biodegradable resin composition is pelletized at 155°C.
2) The pelletized biodegradable resin composition is manufactured into a biodegradable sheet having a Blow-Up Ratio (BUR) of 2.6, an average thickness of 15 μm, and a width of 300 mm.
3) The biodegradable sheet is prepared as a sample having a width of 15 mm, and then a first elongation ($E_0$) of the sample in a Machine Direction (MD) over a length of 50 mm is measured using a Universal Testing Machine (UTM).
4) The sample is put into a QUV tester, and after being irradiated with UV for 8 hours at 60°C and an illuminance of 0.89 w/$m^2$, a cycle of maintaining (the sample) at 50°C for 4 hours is performed 8 times. Next, the sample is taken out and dried at room temperature for 24 hours, and then a second elongation ($E_1$) of the sample in the Machine Direction (MD) is measured using the Universal Testing Machine (UTM).
6) An elongation retention ($\Delta E$) is calculated by Equation 1 below:

[Equation 1]

$$\Delta E(\%) = (E_1 / E_0) \times 100$$

Preferably, the biodegradable resin composition may have an elongation retention of 20% or more, 25% or more, 30% or more, 35% or more, 40% or more, 45% or more, 50% or more, 20% or more to 95% or less, or 20% or more to 90% or less, measured by the measurement method. When the range is satisfied, the UV resistance, mechanical properties, and hydrolysis resistance of the biodegradable molded article may be improved.

The biodegradable resin composition included in the biodegradable molded article may include a hydrolysis inhibitor. The hydrolysis inhibitor may include a carbodiimide-based compound. The carbodiimide-based compound may be a monomer or a polymer.

The carbodiimide-based compound may include a compound represented by Formula 4 below:

[Formula 4]

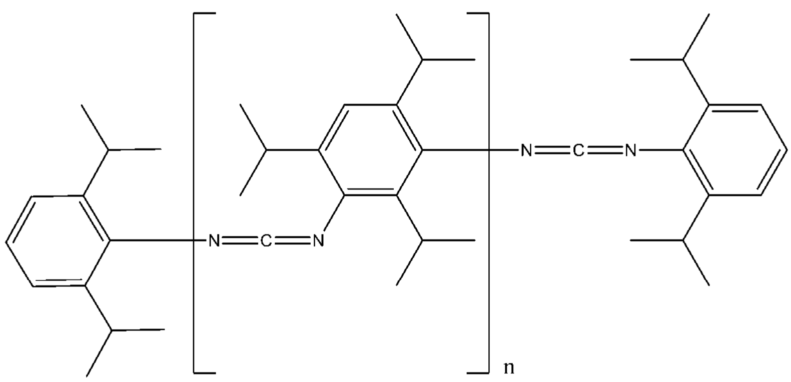

In Formula 4, n may be an integer from 1 to 20.

The biodegradable molded article may have an odor grade of 3 or less according to MS300-34. Specifically, after

the biodegradable resin composition is cut according to the MS300-34 standard to prepare a sample, the odor may be determined as grades 1 to 6, and a lower odor grade means better odor characteristics. When the grade of 3 or less is satisfied, hydrolysis resistance is improved, and odor is reduced, so that commercialization in more various fields is possible compared to a conventional biodegradable molded article, and product reliability may be improved.

The biodegradable molded article may be a biodegradable sheet. The thickness of the biodegradable sheet may be 5 μm to 500 μm, 5 μm to 400 μm, 5 μm to 350 μm, 10 μm to 350 μm, 10 μm to 300 μm, 10 μm to 250 μm, 10 μm to 200 μm, 10 μm to 150 μm, 10 μm to 100 μm, or 10 μm to 90 μm. The tensile strength of the biodegradable sheet may be 1.00 kgf/mm$^2$ or more, 1.50 kgf/mm$^2$ or more, 1.70 kgf/mm$^2$ or more, 1.80 kgf/mm$^2$ or more, 1.90 kgf/mm$^2$ or more, or 2.00 kgf/mm$^2$. When the range is satisfied, the sheet does not tear easily, mechanical properties are excellent, and it may be easily decomposed when discarded a biodegradable molded article containing the same.

The biodegradable film may have an elongation of 85% or more, 90% or more, 95% or more, 1,000% or less, 950% or less, 900% or less, or 850% or less. The elasticity of the biodegradable molded article may be secured, so it may withstand a certain load.

The biodegradable molded article may be a biodegradable sheet. The thickness of the biodegradable sheet may be 5 μm to 1,000 μm, 10 μm to 1,000 μm, 15 μm to 1,000 μm, 20 μm to 1,000 μm, 25 μm to 1,000 μm, 30 μm to 1,000 μm, 35 μm to 1,000 μm, or 40 μm to 1,000 μm. The tensile strength of the biodegradable sheet may be 1.00 kgf/mm$^2$ or more, 1.50 kgf/mm$^2$ or more, 1.70 kgf/mm$^2$ or more, 1.80 kgf/mm$^2$ or more, 1.90 kgf/mm$^2$ or more, or 2.00 kgf/mm$^2$. The tearing strength of the biodegradable sheet may be 100 N/cm or more, 110 N/cm or more, 120 N/cm or more, 130 N/cm or more, 140 N/cm or more, 150 N/cm or more, 700 N/cm or less, 650 N/cm or less, 600 N/cm or less, 550 N/cm or less, or 500 N/cm or less. When the range is satisfied, the sheet is not easily torn, and may be easily decomposed when discarding a biodegradable molded article containing the same.

The biodegradable sheet may have an elongation of 10% or more, 15% or more, 20% or more, 50% or less, 70% or more, 700% or less, 650% or less, 550% or less, 500% or less, or 450% or less. When the range is satisfied, the elasticity of a biodegradable molded article may be secured, so it may withstand a certain load.

<Method of manufacturing biodegradable molded article>

A method of manufacturing a biodegradable molded article according to the present disclosure may include step (a) of preparing a prepolymer by esterifying a diol ingredient and a dicarboxylic acid ingredient, step (b) of preparing a biodegradable resin by polycondensing the prepolymer, step (c) of preparing a biodegradable resin composition by mixing the biodegradable resin, light-blocking particles and an inorganic filler, step (d) of preparing pellets of the biodegradable resin composition, and step (e) of drying and melt-extruding the pellets.

The manufacturing method may include step (a) of preparing a prepolymer by esterifying a diol ingredient and a dicarboxylic acid ingredient.

The diol ingredient and the dicarboxylic acid ingredient may be the same as those of the above-described biodegradable resin composition. In step (a), the prepolymer may be prepared by performing a one-step esterification reaction of the diol ingredient, the dicarboxylic acid ingredient, and optionally, a composition containing the nanocellulose or by a two-step esterification reaction consisting of a first esterification reaction and a second esterification reaction.

The two-step esterification reaction may include step (a-1) of performing the first esterification reaction of the diol ingredient and the dicarboxylic acid ingredient and step (a-2) of performing the second esterification reaction by adding the diol ingredient and the dicarboxylic acid ingredient to the product of step (a-1).

When the biodegradable resin includes the nanocellulose, the binding strength of the nanocellulose may be improved by adding the nanocellulose in the second esterification reaction step. In addition, the binding force of the nanocellulose may be further improved by adding the water-dispersed nanocellulose in the second esterification reaction step.

The nanocellulose may be added at a temperature of 100 °C to 160 °C, 110 °C to 140 °C, or 110 °C to 150 °C. When the range is satisfied, solvent resistance may be improved.

The nanocellulose may be added at a rate of 2 kg/min to 10 kg/min, 2.5 kg/min to 9.5 kg/min, or 3 kg/min to 8 kg/min. When the range is satisfied, without causing re-agglomeration of the nanocellulose, the efficiency of the manufacturing process may be improved.

In step (a), a titanium-based catalyst, a germanium-based catalyst, an antimony-based catalyst, an additive, and a stabilizer may be added before the esterification reaction. The esterification reaction may be performed at a temperature of 250 °C or less, 240 °C or less, 235 °C or less, 180 °C to 250 °C, 185 °C to 240 °C, or 180 °C to 240 °C for 0.5 hours to 5 hours, 0.5 hours to 4.5 hours, 0.5 hours to 3.5 hours, or 1 hours to 3 hours. The esterification reaction may be performed under normal pressure until the by-products water and methanol theoretically reach 90%.

The prepolymer may have a number average molecular weight of 500 g/mol to 10,000 g/mol, 500 g/mol to 8,500 g/mol, 500 g/mol to 7,000 g/mol, 1,000 g/mol to 6,000 g/mol, or 2,500 g/mol to 5,500 g/mol. The number average molecular weight may be measured by gel permeation chromatography (GPC). When the range is satisfied, in the polycondensing

reaction, the molecular weight of the prepolymer may be efficiently increased, thereby improving strength characteristics.

The manufacturing method may include step (b) of preparing a biodegradable resin by polycondensing the prepolymer.

The polycondensing reaction may be performed at a temperature of 180 °C to 280 °C, 190 °C to 270 °C, 210 °C to 260 °C, or 230 °C to 255 °C under a pressure of 1. Torr or less, 0.9 Torr or less, 0.7 Torr or less, 0.2 Torr to 1.0 Torr, 0.3 Torr to 0.9 Torr, or 0.5 Torr to 0.9 Torr for 1 hour to 6 hours, 1.5 hours to 5.5 hours, 2 hours to 5 hours, or 3.5 hours to 4.5 hours.

The biodegradable resin prepared in step (b) may have an intrinsic viscosity of 0.05 to 10 dL/gr. The biodegradable resin may have a melt viscosity of 1,000 to 30,000 poise as measured under the condition of 100 $s^{-1}$ using a Rheometrics Dynamic Spectrometer (RDS). The biodegradable resin may have a number average molecular weight (Mn) of 40,000 g/mol or more, 43,000 g/mol or more, 45,000 g/mol or more, or 40,000 g/mol to 70,000 g/mol. The biodegradable resin may have a weight average molecular weight ($M_W$) of 60,000 g/mol or more, 65,000 g/mol or more, 75,000 g/mol or more, 80,000 g/mol or more, or 85,000 g/mol to 100,000 g/mol. The biodegradable resin may have a polydispersity index (PDI) of 1.2 to 2.0, 1.5 to 1.9, or 1.6 to 1.8. When the number average molecular weight, weight average molecular weight, or polydispersity index of the biodegradable resin satisfies the range, strength and processability may be further improved. The biodegradable resin may have an acid value of 1.8 mgKOH/g or less, 1.5 mgKOH/g or less, 1.3 mgKOH/g or less, or 1.25 mgKOH/g or less. When the range is satisfied, solvent resistance may be improved.

The manufacturing method may include step (c) of preparing a biodegradable resin composition by mixing the biodegradable resin, light-blocking particles and an inorganic filler.

The mixing may be set appropriately according to a molding method. For example, before feeding the biodegradable resin, light-blocking particles and inorganic filler into a molding machine through a hopper, the biodegradable resin, light-blocking particles and inorganic filler may be melt-kneaded. Alternatively, melt-kneading and molding of the biodegradable resin, light-blocking particles and inorganic filler may be performed simultaneously. It is desirable to perform kneading with high shear stress to uniformly distribute the light-blocking particles and the inorganic filler in the biodegradable resin. Specifically, the kneading is preferably performed using a kneader reactor, an extrusion molding machine equipped with a single screw, or a twinscrew kneader. When necessary, in step (c), one or more of the plasticizer and the additive may be additionally added.

Step (c) may include one or more mixing steps. One-stage mixing step may be a single mixing step of preparing a biodegradable resin composition including the inorganic filler in an amount of 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% based on the total weight of the biodegradable resin composition. A two-stage mixing step may include a first mixing step of preparing a biodegradable resin composition including the inorganic filler in an amount of 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% based on the total weight of the biodegradable resin composition and a second mixing step of preparing a biodegradable resin composition including the inorganic filler in an amount of 30 to 85 wt%, 30 to 80 wt%, 30 to 75 wt%, 30 to 70 wt%, 35 to 85 wt%, 35 to 80 wt%, 35 to 75 wt%, 35 to 70 wt%, 40 to 85 wt%, 40 to 80 wt%, 40 to 75 wt%, 40 to 70 wt%, 45 to 85 wt%, 45 to 80 wt%, 45 to 75 wt%, 45 to 70 wt%, 50 to 85 wt%, 50 to 80 wt%, 50 to 75 wt%, or 50 to 70 wt% based on the total weight of the biodegradable resin composition.

The one or more mixing steps may be a tandem continuous process. The mixing step may be performed at a temperature of 150 to 190 °C, 150 to 180 °C, or 160 to 180 °C. When the range is satisfied, an increase in torque during the mixing step may be reduced, and the thermal decomposition of the mixed biodegradable resin composition may be reduced.

Step (c) may include adding a hydrolysis inhibitor. Based on the total weight of the biodegradable resin composition, the hydrolysis inhibitor may be added in an amount of 0.1 wt% to 5.0 wt%, 0.1 wt% to 4.0 wt%, 0.1 wt% to 3.0 wt%, 0.1 wt% to 2.0 wt%, 0.1 wt% to 1.5 wt%, or 0.1 wt% to 1.0 wt%. The hydrolysis inhibitor may include a carbodiimide-based compound. The carbodiimide-based compound reacts with moisture and acid to convert into a urea structure, which may lower the reactivity among moisture, acid and the ester groups included in the biodegradable resin. As a result, the phenomenon of the biodegradable resin being hydrolyzed by moisture and acid may be reduced, and consequently, the hydrolysis resistance of the biodegradable resin composition may be improved.

The carbodiimide-based compound may be one or more selected from the group consisting of N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'cyclohexylcarbodiimide, N,N'-di-2,6-diisopropyphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylene-bis-di-o-tolylcarbodiimide, p-phenylene-bisdicyclohexylcarbodiimide, hexamethylene-bisdicyclohexylcarbodiimide, a homopolymer of ethylene-bisdiphenylcarbodiimide and benzene-2,4-diisocyanato-1,3,5-tris(1-methylethyl), and a copolymer of 2,4-diisocyanato-1,3,5-tris(1-methylethyl) and 2,6-diisopropy diisocyanate.

The manufacturing method may include step (d) of preparing pellets of the biodegradable resin composition.

In step (d), the biodegradable resin composition is fed into an extrusion molding machine equipped with a single

screw or an extrusion molding machine equipped with a twin screw, extruded at a temperature of 150 °C to 180 °C, cut with a hot-cut pellet cutter, and cooled at a temperature of 30 °C or less, 25 °C or less, 5 to 50 °C, 10 to 30 °C, 15 to 25 °C, or 20 to 25 °C to obtain pellets. In the cutting step, pellet cutting machines used in the art may be used without particular limitations, and the shape of the manufactured pellets is not particularly limited.

The manufacturing method may include step (e) of drying and melt-extruding the pellets.

The drying may be performed at 60 °C to 100 °C, 65 °C to 95 °C, 70 °C to 90 °C, or 75 °C to 85 °C for 2 hours to 12 hours, 3 hours to 12 hours, or 4 hours to 10 hours. When the conditions are satisfied, the appearance and mechanical and chemical properties of the biodegradable molded article may be further improved.

The melt-extruding may be performed at 270 °C or less, 265 °C or less, 260 °C or less, 255 °C or less, 130 °C to 270 °C, 130 °C to 250 °C, 140 °C to 230 °C, 150 °C to 200 °C, or 150 °C to 180 °C. The melt-extruding may be performed by a blown film process or a press process without particular limitation. During the melt-extruding, torque may be 100 N·m to 300 N·m or 150 N·m to 250 N·m.

Hereinafter, the present disclosure will be described in more detail based on examples and comparative examples. However, the examples and comparative examples are presented to explain the present disclosure in more detail, and the present disclosure is not limited by the examples and comparative examples.

## Examples

- Biodegradable resin #1: Ecopond
- Biodegradable resin #2: Ecovance
- Biodegradable resin #3: 4032D, NatureWorks Corp.,
- Calcium carbonate: Omya Corp.
- Plasticizer: Glycerol monostearate(GMS)
- Lubricant #1: Stearyl stearate
- Lubricant #2: Calcium stearate
- Antioxidant #1: Phenolic antioxidant, AO-60, Adeca Korea Co.
- Antioxidant #2: Phosphite-based antioxidant, 2112, Adeca Korea Co.
- Carbon black: Having a moisture absorption rate of about 1.55% under conditions of an average diameter of about 20 nm, a BET specific surface area of about 130.5 $m^2/g$, 25°C, 90% relative humidity and 120 hours.
- UV stabilizer: SONGSORB® 3600

### Example 1

Biodegradable resin #1, calcium carbonate, plasticizer, Antioxidant #1, Antioxidant #2, and carbon black were added in a weight ratio of 52.9:43.9:1.0:0.05:0.15:2.0 to a kneader reactor and kneaded at 155°C. Next, the mixture was extruded using a single-screw extruder, and then cut and cooled using a hot-cut pellet cutter to prepare a pelletized biodegradable resin composition.

### Examples 2 to 5 and Comparative Examples 1 to 3

Pelletized biodegradable resin compositions were prepared by the same process as in Example 1, except that the pelletized biodegradable resin compositions were prepared with the compositions described in Table 1 below.

[Table 1]

| Classif ication | Biodeg radable resin #1 | Biodeg radable resin #2 | Biodeg radable resin #3 | Calc ium carb onate | Plast icize r | Lubr icant #1 | Lubr icant #2 | Antio xidan t #1 | Antio xidan t #2 | Car bon bla ck | UV stab ilize r |
|---|---|---|---|---|---|---|---|---|---|---|---|
| Unit | wt% | | | | | | | | | | |
| Exam ple 1 | 52.90 | - | - | 43.9 0 | 1.00 | - | - | 0.05 | 0.15 | 2.0 0 | - |
| Exam ple 2 | - | 52.90 | - | 43.9 0 | 1.00 | - | - | 0.05 | 0.15 | 2.0 0 | - |

(continued)

| Classification | Biodegradable resin #1 | Biodegradable resin #2 | Biodegradable resin #3 | Calcium carbonate | Plasticizer | Lubricant #1 | Lubricant #2 | Antioxidant #1 | Antioxidant #2 | Carbon black | UV stabilizer |
|---|---|---|---|---|---|---|---|---|---|---|---|
| Example 3 | 52.90 | - | - | 43.90 | 1.00 | - | - | 0.05 | 0.15 | 1.00 | - |
| Example 4 | | 75.00 | 10.00 | 15.00 | - | - | - | - | - | 2.00 | - |
| Example 5 | - | 50.60 | - | 47.00 | - | 0.70 | 0.50 | 0.05 | 0.15 | 1.00 | - |
| Comparative Example 1 | 69.50 | - | 10.00 | 20.00 | - | | | - | - | - | 0.50 |
| Comparative Example 2 | 52.90 | - | - | 43.90 | 1.00 | | | 0.05 | 0.15 | - | - |
| Comparative Example 3 | - | 52.90 | - | 43.90 | 1.00 | | | 0.05 | 0.15 | - | - |

## Experimental examples

<Manufacture of film samples>

Each of the pelletized biodegradable resin compositions prepared in Examples 1 to 5 and Comparative Examples 1 to 3 was dried at 80°C for 5 hours, and then melt-extruded at 160°C using a blown film extrusion line (manufacturer: Yujin Engineering) to manufacture a film having a Blow-Up Ratio (BUR) of 2.6, an average thickness of 15 μm, and a width of 300 mm. Next, the film was cut to have a width of 15 mm to prepare a biodegradable resin film sample.

< Manufacture of sheet samples>

After placing each of the pelletized biodegradable resin compositions prepared in Examples 1 to 5 and Comparative Examples 1 to 3 on a flat stainless steel (SUS) plate with a horizontal length of 12 cm and a vertical length of 12 cm, a biodegradable resin sheet having an average thickness of 0.9 mm was prepared under conditions of 180°C temperature and 20 MPa pressure. Next, the sheet was cut into a horizontal length of 10 cm and a vertical length of 3 cm to prepare a biodegradable resin sheet sample.

### Experimental Example 1 - QUV test

For the film samples prepared in Examples 1 to 5 and Comparative Examples 1 to 3, a tensile strength and elongation in the Machine Direction (MD) over a length of 50 mm of the sample were measured using a Universal Testing Machine (UTM, 4206-001) from INSTRON Corp. Here, the elongation refers to a ratio of extension until the sample fractures.

Next, the samples were put into a QUV tester, and a cycle of irradiating with UV at 60°C temperature and 0.89 W/$m^2$ illuminance, and then maintaining at 50°C was performed. Next, the samples were taken out, and dried at room temperature for 24 hours, and then the tensile strength and elongation in the Machine Direction (MD) of the samples were measured using the Universal Testing Machine (UTM). The QUV test conditions and results are shown in Table 2 below.

[Table 2]

| Classification | | Example 1 | Example 2 | Example 3 | Example 4 | Example 5 | Comparative Example 1 | Comparative Example 2 | Comparative Example 3 |
|---|---|---|---|---|---|---|---|---|---|
| Initial | Tensile strength (kgf/mm$^2$) | 2.24 | 3.17 | 2.13 | 4.17 | 3.11 | 2.03 | 1.84 | 1.63 |
| | Elongation (%) | 289 | 199 | 342.5 | 180 | 200 | 241.11 | 311 | 240 |
| A[1] | Tensile strength (kgf/mm$^2$) | 2.20 | 3.10 | 2.04 | 3.84 | 3.12 | 1.85 | 1.64 | 1.51 |
| | Elongation (%) | 250 | 175 | 276 | 176 | 174 | 150 | 104 | 95 |
| B[2] | Tensile strength (kgf/mm$^2$) | 2.17 | 2.97 | 1.98 | 3.64 | 2.98 | 1.75 | 1.34 | 1.42 |
| | Elongation (%) | 210 | 167 | 230 | 170 | 168 | 80 | 45 | 35 |
| C[3] | Tensile | 2.14 | 2.84 | 1.95 | 3.42 | 2.81 | 1.36 | 1.04 | 1.33 |
| | strength (kgf/mm$^2$) | | | | | | | | |
| | Elongation (%) | 168.62 | 158.57 | 195.47 | 166.62 | 159.80 | 30.02 | 27.37 | 37.04 |
| D[4] | Tensile strength (kgf/mm$^2$) | 2.03 | 2.57 | 2.25 | 3.09 | 2.55 | 1.75 | 1.24 | 1.09 |
| | Elongation (%) | 151.04 | 141.75 | 139.54 | 141.65 | 142.75 | 29.15 | 24.15 | 26.86 |
| E[5] | Tensile strength (kgf/mm$^2$) | 2.04 | 2.48 | 2.23 | 2.86 | 2.49 | 1.85 | N.A.[7] | |
| | Elongation (%) | 103.92 | 118.04 | 107.29 | 130.83 | 117.31 | 26.19 | | |
| F[6] | Tensile strength (kgf/mm$^2$) | 2.01 | 2.48 | 2.17 | 2.84 | 2.46 | 1.84 | | |
| | Elongation (%) | 78.14 | 87.19 | 80.18 | 118.4 | 87.11 | 24.18 | | |

1) A: A cycle of irradiating with UV for 8 hours and then maintaining at 50°C for 4 hours was performed 2 times.
2) B: A cycle of irradiating with UV for 8 hours and then maintaining at 50°C for 4 hours was performed 4 times.
3) C: A cycle of irradiating with UV for 8 hours and then maintaining at 50°C for 4 hours was performed 8 times.
4) D: A cycle of irradiating with UV for 8 hours and then maintaining at 50°C for 4 hours was performed 16 times.

(continued)

| Classification | Example 1 | Example 2 | Example 3 | Example 4 | Example 5 | Comparative Example 1 | Comparative Example 2 | Comparative Example 3 |
|---|---|---|---|---|---|---|---|---|
| 5) E: A cycle of irradiating with UV for 8 hours and then maintaining at 50°C for 4 hours was performed 24 times. | | | | | | | | |
| 6) F: A cycle of irradiating with UV for 8 hours and then maintaining at 50°C for 4 hours was performed 34 times. | | | | | | | | |
| 7) N.A.: Not measured. | | | | | | | | |

**Experimental Example 2 - Hydrolysis resistance test**

Using gel permeation chromatography (GPC) under the following measurement conditions, the initial number-average molecular weights of the sheet samples prepared in Examples 1 to 5 and Comparative Examples 1 to 3 were measured.

Next, the sheet samples were immersed in a beaker containing water, which was then sealed, and stored in an 80°C oven for 7 days. Next, the sheet samples were taken out of the beaker, their surfaces were wiped twice with gauze, and then the post-aging number-average molecular weights were measured using GPC under the following measurement conditions.

The hydrolysis reduction rate was calculated by Equation 2 below, and the results are shown in Table 3 below. It was determined that, as the difference between the initial number-average molecular weight and the post-aging number-average molecular weight was small, i.e., as the hydrolysis reduction rate was large, the hydrolysis resistance was superior.

Hydrolysis reduction rate (%) = [(Initial number-average molecular weight) - (Post-aging number-average molecular weight)] / (Initial number-average molecular weight) $\times$ 100 [Equation 2]

< Measurement conditions >

- Instrument: APC system (Waters)
- Column: Acquity APC XT Column 45A (4.6*150 mm) x 2
- Mobile phase: THF
- Flow rate: 0.5 mL/min
- Sample concentration: 10mg/10mL
- Injection volume: 10 $\mu\ell$
- Detector: RID 40°C
- Total run time: 10 min

**Experimental Example 3 - Biodegradability test**

An inoculum container with only compost manufactured at a compost plant was prepared, and respective test containers were prepared by adding the sheet samples manufactured in Examples 1 to 5 and Comparative Examples 1 to 3, in an amount of 5 wt% of the dry weight of the compost, onto the compost. Next, the test containers were cultured for 180

days under conditions of 60°C temperature, 90% humidity, and an oxygen concentration of 6% or more, and the carbon dioxide generated from each test container was captured and titrated with a phenolphthalein aqueous solution to measure the amount of carbon dioxide generated. Biodegradability was calculated by Equation 3 below, and the results are shown in Table 3

Biodegradability (%) = [(Amount of $CO_2$ generated in test container) - (Amount of $CO_2$ generated in inoculum container)] / (Theoretical amount of $CO_2$ generated in test container) × 100 [Equation 3]

**Experimental Example 4 - Tearing strength**

After making a 2 mm notch in the center of each of the film samples manufactured in Examples 1 to 5 and Comparative Examples 1 to 3, the initial tearing strength was calculated by Equation 4 below using a Universal Testing Machine (UTM, 4206-001) from INSTRON Corp. Next, the tearing strength after the QUV test according to C in Table 2 was calculated, and the results are shown in Table 3.

[Equation 4]

Tearing strength (N/cm) = Force (N) required for tearing / Sample thickness (cm)

[Table 3]

| | First elongation1) ($E_0$) | Second elongation2) ($E_1$) | Elongation retention3) ($\Delta E$) | Hydrolysis reduction rate | Biodegradability | Initial tearing strength | Tearing strength after QUV test | Tearing strength retention4) |
|---|---|---|---|---|---|---|---|---|
| Unit | % | | | | | N/cm | | % |
| Example 1 | 289 | 168.62 | 58.3 | 70 | 90 | 440 | 380 | 86.4 |
| Example 2 | 199 | 158.57 | 79.7 | 72 | 90 | 445 | 395 | 88.7 |
| Example 3 | 342.5 | 195.47 | 57.1 | 70 | 90 | 440 | 385 | 87.5 |
| Example 4 | 180 | 166.62 | 92.6 | 73 | 85 | 450 | 390 | 86.7 |
| Example 5 | 200 | 159.80 | 79.9 | 72 | 90 | 445 | 390 | 87.6 |
| Comparative Example 1 | 241.11 | 30.02 | 12.5 | 43 | 85 | 420 | 180 | 42.9 |
| Comparative Example 2 | 331 | 27.37 | 8.3 | 42 | 85 | 410 | 155 | 37.8 |
| Comparative Example 3 | 240 | 37.04 | 15.4 | 45 | 85 | 410 | 175 | 42.7 |

1) First elongation ($E_0$): Initial elongation in Table 2
2) Second elongation ($E_1$): Elongation of C in Table 2
3) Elongation retention ($\Delta E$): ($E_1$ / $E_0$) × 100
4) Tearing strength retention: (Tearing strength after QUV test / Initial tearing strength) × 100

As can be confirmed from Tables 1 to 3, Examples 1 to 5, which satisfy an elongation retention of 20% or more,

have biodegradability equal to or greater than that of Comparative Examples 1 to 3, and have excellent hydrolysis resistance and excellent resistance to UV rays. Therefore, it can be confirmed that a user can appropriately maintain a certain level of mechanical strength and chemical properties within a normal service life.

[Industrial Applicability]

Embodiments can be applied to a biodegradable resin composition and a biodegradable molded article including the same.

## Claims

1. A biodegradable resin composition, comprising:

   a biodegradable resin;
   light-blocking particles; and
   an inorganic filler,
   wherein the biodegradable resin composition has an elongation retention ($\Delta E$) of 20% or more, measured by a measurement method below:
   [Measurement method]

   1) The biodegradable resin composition is pelletized at 155°C.
   2) The pelletized biodegradable resin composition is manufactured into a biodegradable sheet having a Blow-Up Ratio (BUR) of 2.6, an average thickness of 15 μm, and a width of 300 mm.
   3) The biodegradable sheet is prepared as a sample having a width of 15 mm, and then a first elongation ($E_0$) of the sample in a Machine Direction (MD) over a length of 50 mm is measured using a Universal Testing Machine (UTM).
   4) The sample is put into a QUV tester, and after being irradiated with UV for 8 hours at 60°C and an illuminance of 0.89 w/$m^2$, a cycle of maintaining (the sample) at 50°C for 4 hours is performed 8 times. Next, the sample is taken out and dried at room temperature for 24 hours, and then a second elongation ($E_1$) of the sample in the Machine Direction (MD) is measured using the Universal Testing Machine (UTM).
   6) An elongation retention ($\Delta E$) is calculated by Equation 1 below:

   [Equation 1]

   $$\Delta E(\%) = (E_1 / E_0) \times 100$$

2. The biodegradable resin composition according to claim 1, wherein the biodegradable resin is comprised in a content of 30 wt% to 90 wt% based on a total weight of the biodegradable resin composition.

3. The biodegradable resin composition according to claim 1, wherein the light-blocking particles are comprised in a content of 0.1 wt% to 10.0 wt% based on a total weight of the biodegradable resin composition.

4. The biodegradable resin composition according to claim 1, wherein the light-blocking particles have an average diameter of 10 nm to 500 nm.

5. The biodegradable resin composition according to claim 1, wherein the light-blocking particles have a BET specific surface area of 100 $m^2$/g to 700 $m^2$/g.

6. The biodegradable resin composition according to claim 1, wherein the light-blocking particles have a moisture absorption rate of 0.01 % to 2.00 % under conditions of 25°C, 90% relative humidity, and 120 hours.

7. The biodegradable resin composition according to claim 1, wherein the inorganic filler is comprised in a content of 10 wt% to 90 wt% based on a total weight of the biodegradable resin composition.

8. The biodegradable resin composition according to claim 1, wherein the inorganic filler comprises calcium carbonate surface-treated with an organic acid.

**9.** The biodegradable resin composition according to claim 1, wherein the first elongation of the biodegradable resin composition is 150 % to 400 %.

**10.** The biodegradable resin composition according to claim 1, wherein the second elongation of the biodegradable resin composition is 100 % to 300 %.

**11.** The biodegradable resin composition according to claim 1, wherein the biodegradable resin composition further comprises a plasticizer.

**12.** A biodegradable molded article, comprising a biodegradable resin composition, wherein the biodegradable resin composition comprises a biodegradable resin, light-blocking particles, and an inorganic filler and has an elongation retention (ΔE) of 20% or more measured by a measurement method below:
[Measurement method]

1) The biodegradable resin composition is pelletized at 155°C.
2) The pelletized biodegradable resin composition is manufactured into a biodegradable sheet having a Blow-Up Ratio (BUR) of 2.6, an average thickness of 15 μm, and a width of 300 mm.
3) The biodegradable sheet is prepared as a sample having a width of 15 mm, and then a first elongation ($E_0$) of the sample in a Machine Direction (MD) over a length of 50 mm is measured using a Universal Testing Machine (UTM).
4) The sample is put into a QUV tester, and after being irradiated with UV for 8 hours at 60°C and an illuminance of 0.89 w/m$^2$, a cycle of maintaining (the sample) at 50°C for 4 hours is performed 8 times. Next, the sample is taken out and dried at room temperature for 24 hours, and then a second elongation ($E_1$) of the sample in the Machine Direction (MD) is measured using the Universal Testing Machine (UTM).
6) An elongation retention (ΔE) is calculated by Equation 1 below:

[Equation 1]

$$\Delta E(\%) = (E_1 / E_0) \times 100$$

**13.** The biodegradable molded article according to claim 12, wherein the biodegradable molded article is a nonwoven fabric, a vacuum-formed sheet, a blown molded article, or an injection-molded article.

**INTERNATIONAL SEARCH REPORT**

International application No.
**PCT/KR2024/006188**

**A. CLASSIFICATION OF SUBJECT MATTER**

**C08K 9/04**(2006.01)i; **C08K 3/26**(2006.01)i; **C08K 3/013**(2018.01)i; **C08L 101/16**(2006.01)i

According to International Patent Classification (IPC) or to both national classification and IPC

**B. FIELDS SEARCHED**

Minimum documentation searched (classification system followed by classification symbols)

C08K 9/04(2006.01); B29C 48/08(2019.01); B29D 7/01(2006.01); B65D 1/00(2006.01); C08J 5/18(2006.01); C08K 3/26(2006.01); C08K 5/00(2006.01); C08K 5/11(2006.01); C08L 67/04(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성 수지(biodegradable resin), 차광 입자(light blocking particles), 무기 충전제(inorganic filler), 탄산칼슘(calcium carbonate), 연신율 유지율(elongation retention rate), 생분해성 성형품(biodegradable molded product)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0005735 A (TBM CO., LTD.) 14 January 2021 (2021-01-14)<br>See paragraphs [0110], [0114], [0125] and [0135]; and claims 1 and 5. | 1-13 |
| X | KR 10-2023-0063856 A (SKC CO., LTD.) 09 May 2023 (2023-05-09)<br>See paragraphs [0085], [0095], [0108], [0109], [0161] and [0162]; and claims 1-4. | 1-13 |
| A | KR 10-2431676 B1 (CJ CHEILJEDANG CORPORATION) 11 August 2022 (2022-08-11)<br>See entire document. | 1-13 |
| A | KR 10-2016-0069324 A (SK INNOVATION CO., LTD. et al.) 16 June 2016 (2016-06-16)<br>See entire document. | 1-13 |
| A | US 2023-0045673 A1 (EASTMAN CHEMICAL COMPANY) 09 February 2023 (2023-02-09)<br>See entire document. | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 September 2024** | **11 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/006188**

| Patent document cited in search report | Publication date (day/month/year) | Patent family member(s) | Publication date (day/month/year) |
|---|---|---|---|
| KR 10-2021-0005735 A | 14 January 2021 | CN 112352021 A | 09 February 2021 |
| | | CN 112352021 B | 03 June 2022 |
| | | EP 3792314 A1 | 17 March 2021 |
| | | EP 3792314 A4 | 18 August 2021 |
| | | EP 3792314 B1 | 11 January 2023 |
| | | JP 2020-066721 A | 30 April 2020 |
| | | JP 6675690 B1 | 01 April 2020 |
| | | KR 10-2244819 B1 | 27 April 2021 |
| | | US 11242441 B2 | 08 February 2022 |
| | | US 2021-0238383 A1 | 05 August 2021 |
| | | WO 2020-084945 A1 | 30 April 2020 |
| KR 10-2023-0063856 A | 09 May 2023 | WO 2023-080496 A1 | 11 May 2023 |
| KR 10-2431676 B1 | 11 August 2022 | CN 117795004 A | 29 March 2024 |
| | | WO 2023-008903 A1 | 02 February 2023 |
| KR 10-2016-0069324 A | 16 June 2016 | None | |
| US 2023-0045673 A1 | 09 February 2023 | CN 115003743 A | 02 September 2022 |
| | | EP 4093815 A1 | 30 November 2022 |
| | | KR 10-2022-0131959 A | 29 September 2022 |
| | | WO 2021-150540 A1 | 29 July 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9096758 B
- US 4797468 A
- US 5470944 A
- US 5770682 A
- US 5821327 A
- US 5880254 A
- US 6326458 B


### Non-patent literature cited in the description


- *J. Bacteriol.*, 1997, vol. 179, 4821